# EUROPÄISCHE PATENTSCHRIFT

(11) **EP 3 084 470 B1**
(45) Veröffentlichungstag und Bekanntmachung des Hinweises auf die Patenterteilung: **13.01.2021**
(21) Anmeldenummer: 14802859.0
(22) Anmeldetag: 21.11.2014
(51) Int. Cl.: G01S 15/931, G01S 7/02, G01S 15/10, G01S 15/32, G01S 15/87, G01S 7/527

(54) **VERFAHREN ZUM DETEKTIEREN VON ZIELECHOS IN EINEM EMPFANGSSIGNAL EINES ULTRASCHALLSENSORS EINES KRAFTFAHRZEUGS, ULTRASCHALLSENSOREINRICHTUNG UND KRAFTFAHRZEUG**
METHOD FOR DETECTING TARGET ECHOES IN A RECEIVED SIGNAL OF AN ULTRASONIC SENSOR OF A MOTOR VEHICLE, ULTRASONIC SENSOR DEVICE, AND MOTOR VEHICLE
PROCÉDÉ DE DÉTECTION D'ÉCHOS DE CIBLE DANS UN SIGNAL DE RÉCEPTION D'UN CAPTEUR À ULTRASONS D'UN VÉHICULE AUTOMOBILE, DISPOSITIF DE DÉTECTION D'ULTRASONS ET VÉHICULE AUTOMOBILE

(30) Priorität: 21.12.2013 DE 102013021845
(43) Veröffentlichungstag der Anmeldung: 26.10.2016
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE); JUNG, Thomas, 74321 Bietigheim-Bissingen (DE)
(74) Vertreter: Enge, Sebastian
(86) Internationale Anmeldenummer: PCT/EP2014/075229
(87) Internationale Veröffentlichungsnummer: WO 2015/090842

(56) Entgegenhaltungen:
- EP-A2- 2 144 069
- DE-A1-102011 109 915

## Beschreibung

Die Erfindung betrifft ein Verfahren zum Detektieren von Zielechos in einem Empfangssignal eines Ultraschallsensors eines Kraftfahrzeugs gemäß Anspruch 1.

Erfindung betrifft außerdem eine Ultraschallsensoreinrichtung zum Durchführen eines solchen Verfahrens sowie ein Kraftfahrzeug mit einer derartigen Ultraschallsensoreinrichtung.

Ultraschallsensoren für Kraftfahrzeuge sind bereits aus dem Stand der Technik in vielfältiger Ausgestaltung bekannt. Sie werden üblicherweise zum Unterstützen des Fahrers beim Manövrieren des Kraftfahrzeugs eingesetzt, insbesondere beim Durchführen von Parkvorgängen. Mittels der Ultraschallsensoren werden dabei Abstände zu Hindernissen gemessen, die sich in der Umgebung des Kraftfahrzeugs befinden. Die Ultraschallsensoren gehören hier zu einer Fahrerassistenzeinrichtung, welche als Parkhilfe bezeichnet wird. Jedoch werden Ultraschallsensoren heutzutage auch immer häufiger außerhalb dieser eigentlichen Parkhilfefunktionalität eingesetzt, wie beispielsweise zur Fahrunterstützung mit aktiven Bremseingriffen, d.h. bei automatischen Bremsassistenzsystemen, bei Systemen zur Totwinkelüberwachung, bei Systemen zur Abstandshaltung, bei Kollisionserkennungssystemen und dergleichen.

Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet ein Sendesignal - Ultraschall - aus und empfängt ein Empfangssignal, das ebenfalls ein Schallsignal ist und einem Signalanteil des ausgesendeten und an einem Hindernis reflektierten Sendesignals entspricht. Es werden also Ultraschallwellen ausgesendet, von einem Objekt reflektiert und wieder durch denselben Ultraschallsensor und/oder einen benachbarten Ultraschallsensor desselben Kraftfahrzeugs empfangen und ausgewertet. In Abhängigkeit von der gemessenen Laufzeit der Ultraschallwelle wird dann der Abstand und gegebenenfalls auch die relative Position und/oder eine Relativgeschwindigkeit relativ zum Kraftfahrzeug bestimmt.

Es ist außerdem Stand der Technik, das Sendesignal eines Ultraschallsensors zu modulieren bzw. zu Codieren, so dass dem Sendesignal ein vorbestimmtes, spezifisches Codewort aufgeprägt wird und mit dem Sendesignal somit dieses spezifische Codewort bzw. eine Kennung übertragen wird. Das Sendesignal kann dann von anderen Störsignalen bzw. von Schallsignalen anderer Sensoren des eigenen Kraftfahrzeugs und auch von Schallsignalen anderer Kraftfahrzeuge unterschieden werden. Auf der einen Seite kann somit das Empfangssignal von Ultraschallsignalen anderer Fahrzeuge unterschieden werden; andererseits wird somit auch ein gleichzeitiger Betrieb mehrerer Ultraschallsensoren ein und desselben Kraftfahrzeugs ermöglicht. In diesem Falle sendet jeder Ultraschallsensor ein Sendesignal mit einer zugeordneten spezifischen Kennung und kann dann das eigene Schallsignal oder aber das Signal eines benachbarten Sensors wieder erkennen.

Ein Verfahren zum gleichzeitigen Betreiben mehrerer Ultraschallsensoren ist beispielsweise aus dem Dokument DE 101 06 142 A1 bekannt. Auch aus der Druckschrift EP 1 105 749 B1 ist bekannt, dass die Sendesignale unterschiedlicher Ultraschallsensoren mit einer eigenen Kennung versehen und somit voneinander unterschieden werden können. Die Codierung eines Schallsignals eines Ultraschallsensors ist des Weiteren aus dem Dokument DE 37 01 521 A1 bekannt.

Wenn das Sendesignal codiert wird und hierbei dem Sendesignal eine spezifische Kennung bzw. ein Codewort aufgeprägt wird, so muss auch überprüft werden, ob das empfangene Empfangssignal dieselbe Kennung aufweist und somit das von einem Objekt reflektierte Sendesignal ist bzw. ein und demselben Ultraschallsensor zugeordnet werden kann. Nach heutigem Stand der Technik werden die empfangenen Signale mittels Korrelation auf ihre Codierung hin überprüft. Das Decodieren des Empfangssignals sieht also so aus, dass dieses Empfangssignal mit einem Referenzsignal korreliert wird, wobei das Ergebnis der Korrelation ein Maß für die Übereinstimmung zwischen dem empfangenen Ultraschallsignal und dem erwarteten Signal ist. Als Referenzsignal wird üblicherweise das ausgesendete Sendesignal bzw. ein Signal verwendet, welches dem Sendesignal entspricht. Wird eine relativ große Korrelation zwischen dem Empfangssignal und dem Referenzsignal erkannt, so wird festgestellt, dass es sich bei dem Empfangssignal um das eigene Signal des Ultraschallsensors handelt bzw. das Empfangssignal den gleichen Code wie das Sendesignal enthält.

Anhand einer einfachen Korrelation ist die Bestimmung der Herkunft des Empfangssignals bzw. die Decodierung des Empfangssignals jedoch nicht immer mit großer Genauigkeit möglich. Dies deshalb, weil sich das fahrzeugexterne Objekt häufig relativ zum Kraftfahrzeug bewegt und die Relativgeschwindigkeit zwischen dem Kraftfahrzeug und dem Objekt eine Frequenzverschiebung des Ultraschallsignals aufgrund des Dopplereffekts verursacht. Deshalb wird im Stand der Technik häufig auch ein Referenzsignal für die Korrelation verwendet, welches nicht genau dem ausgesendeten Sendesignal entspricht, sondern einem in seiner Frequenz verschobenen Sendesignal. Somit wird versucht, die Dopplerverschiebung des Empfangssignals zu kompensieren. Ein derartiges Verfahren ist aus dem Dokument DE 10 2011 109 915 A1 bekannt.

Die Erfindung geht von einem Verfahren aus, bei welchem zur Decodierung des modulierten bzw. codierten Empfangssignals das Referenzsignal - dieses entspricht üblicherweise dem Sendesignal - separat um mehrere Frequenzverschiebungswerte in seiner Frequenz verschoben wird. Es entstehen somit mehrere Korrelationseingangssignale, mit denen das Empfangssignal separat korreliert wird. Durch diese Korrelation werden jeweilige Korrelationsausgangssignale bereitgestellt, aus denen dann ein Summensignal gebildet wird, in welchem nach Zielechos gesucht wird. Es wird also eine an die verschiedenen Objektgeschwindigkeiten angepasste Filterbank mit mehreren Dopplergates im Empfangspfad eingesetzt, wie dies beispielsweise in dem Dokument DE 101 06 142 A1 beschrieben ist. Die "Dopplergates" sind auch unter der Bezeichnung "Dopplerbins" bekannt. Dabei ist es nötig, für jede mögliche Relativgeschwindigkeit zwischen Fahrzeug und Zielobjekt ein Korrelationseingangssignal (das frequenzverschobene Referenzsignal) vorzuhalten, nämlich sowohl für positive als auch für negative Relativgeschwindigkeiten. Dieses Verfahren erweist sich bei einfachen Szenarien mit nur einem Zielobjekt als ausreichend, findet jedoch seine Grenzen bei Szenarien, bei denen sich in der Umgebung des Kraftfahrzeugs mehrere, sehr dicht aneinander stehende Zielobjekte oder aber Objekte mit mehreren Reflexionspunkten befinden. In solchen Szenarien verschwinden nämlich kleinere Objekte (Objekte mit niedrigerer Korrelatoramplitude) im allgemeinen Korrelationsrauschen. Das Korrelationsergebnis enthält nämlich ein relativ hohes Eigenrauschen, welches das Signal-Rausch-Verhältnis signifikant verringert. Im Summensignal können somit Zielechos im Korrelationsrauschen verschwinden, welche von relativ kleinen Zielobjekten stammen. Um bei der Detektion der Zielechos eine bessere Auflösung zu erzielen, müsste jedes Korrelationsausgangssignal separat ausgewertet werden. Die Übertragung der Auswertungsergebnisse aller Korrelationsausgangssignale würde jedoch zu einem nicht zu vertretenden Anstieg der Buslast zwischen Ultraschallsensor und Steuergerät führen.

Aus der EP 2 144 069 A2 ist ein Verfahren zur Bestimmung einer Geschwindigkeit eines Objekts bekannt. Dabei basiert die Bestimmung der Geschwindigkeit des Objekts auf einer Korrelation eines empfangenen am Objekt reflektierten Pulses mit transformierten Signalfolgen.

Aus der DE 10 2011 109 915 A1 ist ein Verfahren zum Bestimmen der Herkunft eines von einem Ultraschallsensor empfangenen Empfangssignals, wobei ein Sendesignal des Ultraschallsensors moduliert wird und durch dies Modulation ein vorbestimmtes Codewort dem Sendesignal aufgeprägt wird.

Es ist Aufgabe der Erfindung, eine Lösung aufzuzeigen, wie bei einem Verfahren der eingangs genannten Gattung die räumliche Auflösung bei der Detektion der Zielobjekte im Vergleich zum Stand der Technik verbessert werden kann.

Diese Aufgabe wird erfindungsgemäß durch ein Verfahren, durch eine Ultraschallsensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren werden Zielechos in einem Empfangssignal eines Ultraschallsensors eines Kraftfahrzeugs detektiert. Das Empfangssignal ist ein Signalanteil eines Sendesignals, welches von dem Ultraschallsensor oder einem anderen Ultraschallsensor desselben Kraftfahrzeugs ausgesendet und in der Umgebung des Kraftfahrzeugs reflektiert wird. Das Sendesignal wird codiert ausgesendet, sodass dem Sendesignal ein vorbestimmtes Codewort aufgeprägt wird. Entsprechend enthält auch das Empfangssignal ein Codewort und muss daher wieder demoduliert werden. Es kann beispielsweise eine Frequenzmodulation und/oder Phasenmodulation verwendet werden. Zur Decodierung des Empfangssignals wird ein Referenzsignal bereitgestellt, welches beispielsweise dem ausgesendeten Sendesignal entspricht. Zu einer Vielzahl von vorbestimmten Frequenzverschiebungswerten (für eine Vielzahl von möglichen Relativgeschwindigkeiten) wird jeweils ein Korrelationseingangssignal durch Verschieben des Referenzsignals in seiner Frequenz um den jeweiligen Frequenzverschiebungswert bereitgestellt. Die Frequenzverschiebungswerte können auch den Nullwert umfassen. Das Empfangssignal wird dann separat mit jedem Korrelationseingangssignal korreliert, und hierdurch werden jeweilige Korrelationsausgangssignale als Ergebnis der jeweiligen Korrelation bereitgestellt. Aus den Korrelationsausgangssignalen wird ein Summensignal gebildet. Erfindungsgemäß ist vorgesehen, dass anhand des Summensignals eines der Korrelationsausgangssignale ausgewählt wird und das Detektieren der Zielechos durch Auswertung des ausgewählten Korrelationsausgangssignals, insbesondere alleine des ausgewählten Korrelationsausgangssignals, erfolgt.

Zur Verbesserung der räumlichen Auflösung wird demnach vorgeschlagen, das Summensignal der Korrelationsausgangssignale zur Auswahl eines der Korrelationsausgangssignale bzw. einer bestimmten Dopplerbin zu verwenden. Die Erfindung basiert dabei auf der Erkenntnis, dass Zielechos, welche auf kleine Zielobjekte zurückzuführen sind, zwar im Korrelationsrauschen von Zielechos größerer Objekte verschwinden können, ohne die größeren Zielobjekte jedoch sichtbar und somit detektierbar wären. Auf Basis des Summensignals wird daher nachträglich das zugehörige Dopplergate ausgewählt und zur Detektion der Zielechos das ausgewählte Korrelationsausgangssignal ausgewertet. In dem ausgewählten Korrelationsausgangssignal können nun auch Zielechos kleinerer Zielobjekte detektiert werden, welche anhand des Summensignals aufgrund des größeren Korrelationsrauschens nicht detektiert werden könnten. Mit dem erfindungsgemäßen Verfahren lassen sich somit auch kleinere Zielobjekte detektieren, welche sich sehr nahe an einem größeren Zielobjekt befinden.

Das Verfahren wird vorzugsweise mittels einer Auswerteeinrichtung durchgeführt, welche Bestandteil des Ultraschallsensors selbst ist. Dies bedeutet, dass die Auswerteeinrichtung in ein Sensorgehäuse des Ultraschallsensors integriert ist. Das Ergebnis der Detektion der Zielechos wird dann von dem Ultraschallsensor an ein Steuergerät des Kraftfahrzeugs übermittelt.

Die Auswahl eines der Korrelationsausgangssignale sieht erfindungsgemäß folgendermaßen aus: Es kann ein Maximum des Summensignals detektiert werden. Zur Detektion der Zielechos wird dann dasjenige Korrelationsausgangssignal ausgewählt, zu welchem das detektierte Maximum gehört. Es wird also dasjenige Korrelationsausgangssignal ausgewählt, welches zu der höchsten Amplitude im Summensignal gehört. Auf diese Art und Weise kann stets sichergestellt werden, dass das größte Zielecho und somit das Zielobjekt mit dem größten Reflexionsvermögen und darüber hinaus auch kleinere Zielechos detektiert werden können, die sich im Bereich des größten Zielechos befinden.

Erfindungsgemäß wird das Summensignal in eine Vielzahl von Signalabschnitten unterteilt. Zu jedem Signalabschnitt erfolgt die Auswahl eines der Korrelationsausgangssignale separat. Jedem Signalabschnitt wird dabei jeweils ein zeitlich korrespondierender Abschnitt des jeweils ausgewählten Korrelationsausgangssignals zugeordnet. Das Detektieren der Zielechos erfolgt dann durch Auswertung der entsprechenden Abschnitte der ausgewählten Korrelationsausgangssignale. Mit anderen Worten wird das Summensignal im Zeitbereich in mehrere Zeitintervalle unterteilt, wobei für jedes Zeitintervall die Auswahl eines der Korrelationsausgangssignale separat erfolgt, sodass das Summensignal in dem jeweiligen Zeitintervall quasi durch das ausgewählte Korrelationsausgangssignal ersetzt wird und in diesem Zeitintervall die Detektion der Zielechos durch Auswertung des entsprechenden Abschnitts des ausgewählten Korrelationsausgangssignals erfolgt. Somit wird ein Auswertungssignal aus Abschnitten unterschiedlicher Korrelationsausgangssignale gebildet, anhand dessen dann Zielechos detektiert werden können, die sich in unterschiedlichen Entfernungen von dem Kraftfahrzeug befinden.

Zu jedem Signalabschnitt des Summensignals wird erfindungsgemäß ein jeweiliges lokales Maximum detektiert. Es wird dann jeweils dasjenige Korrelationsausgangssignal ausgewählt, zu welchem das jeweilige lokale Maximum gehört. Für jede Entfernung kann somit jeweils das Zielecho mit der höchsten Amplitude sowie die benachbarten Zielechos detektiert werden, welche im Summensignal aufgrund des hohen Korrelationsrauschens nicht detektiert werden könnten.

Das Unterteilen des Summensignals in mehrere Signalabschnitte erfolgt vorzugsweise in Abhängigkeit von einem zeitlichen Verlauf des Summensignals selbst. Die Unterteilung erfolgt somit situationsabhängig bzw. abhängig von dem aktuellen Umgebungsszenario und somit abhängig von dem Amplitudenverlauf des Summensignals. Die Detektion der Zielechos kann somit noch besser an das aktuelle Szenario angepasst werden, und es kann zum richtigen Zeitpunkt ein neues Korrelationsausgangssignal ausgewählt werden.

Vorzugsweise ist dabei vorgesehen, dass beim Unterteilen des Summensignals selbiges Signal mit einer Schwellwertfunktion verglichen wird und bei Überschreiten der Schwellwertfunktion der Beginn eines neuen Signalabschnitts einer vorgegebenen Zeitdauer definiert wird. Als Beginn eines neuen Signalabschnitts wird somit ein Zeitpunkt definiert, zu welchem ein mögliches Zielecho detektiert wird. Beginnend von diesem Zeitpunkt wird eine Zeitdauer definiert, welche die Länge des neuen Signalabschnitts des Summensignals charakterisiert. Somit werden für die Auswahl eines der Korrelationsausgangssignale alle möglichen Zielechos berücksichtigt, die sich im Bereich des ersten detektierten Echos befinden, welches beim Überschreiten der Schwellwertfunktion detektiert wurde. Es können somit alle relevanten Zielobjekte detektiert werden, die sich in einem bestimmten Entfernungsbereich vom Kraftfahrzeug befinden.

Erst nach Ablauf der vorgegebenen Zeitdauer wird das Summensignal dann erneut zur Festlegung eines weiteren Signalabschnitts mit der Schwellwertfunktion verglichen. Erst nach Ablauf der vorgegebenen Zeitdauer wird also erneut zur Festlegung eines neuen Signalabschnitts überprüft, ob das Summensignal die Schwellwertfunktion überschreitet. Wird die Schwellwertfunktion dann überschritten, so wird der Beginn eines neuen Signalabschnitts definiert, welcher die oben genannte vorgegebene Zeitdauer aufweist. Dieses Verfahren wird wiederholt durchgeführt, sodass jeweils nach Ablauf der vorgegebenen Zeitdauer das Summensignal erneut zur Festlegung eines weiteren Signalabschnitts mit der Schwellwertfunktion verglichen wird. Somit kann sichergestellt werden, dass alle Zielechos auch zuverlässig detektiert werden können.

Es hat sich als vorteilhaft erwiesen, wenn als Schwellwertfunktion eine Hüllkurve definiert wird, welche durch Tiefpass-Filterung des Summensignals bereitgestellt wird. Auch die Schwellwertfunktion wird somit abhängig von dem zeitlichen Verlauf des Summensignals selbst festgelegt und damit an das jeweilige Szenario angepasst. Dadurch können alle Signalspitzen des Summensignals detektiert werden, welche ein mögliches Zielecho darstellen können.

Wird für den jeweiligen Signalabschnitt des Summensignals eines der Korrelationsausgangssignale ausgewählt, so erfolgt die Auswertung des ausgewählten Korrelationsausgangssignals zur Detektion der Zielechos vorzugsweise derart, dass Signalwerte des ausgewählten Korrelationsausgangssignals mit einer Detektionsschwellwertkurve verglichen werden. Diejenigen Signalanteile des Korrelationsausgangssignals, welche die Detektionsschwellwertkurve überschreiten, werden als Zielechos interpretiert und angezeigt.

Die Erfindung betrifft außerdem eine Ultraschallsensoreinrichtung für ein Kraftfahrzeug, mit einer Empfangseinheit - insbesondere umfassen eine Membran und ein Piezoelement - zum Empfangen eines Schallsignals und zum Bereitstellen eines elektrischen Empfangssignals abhängig von dem empfangenen Schallsignal, und mit einer Auswerteeinrichtung zum Detektieren von Zielechos in dem Empfangssignal. Die Auswerteeinrichtung ist zum Durchführen eines erfindungsgemäßen Verfahrens ausgebildet.

Die Ultraschallsensoreinrichtung umfasst vorzugsweise einen Ultraschallsensor mit einem Sensorgehäuse, in welchem die Auswerteeinrichtung angeordnet ist. Die detektierten Zielechos werden vorzugsweise von der Auswerteeinrichtung an ein Steuergerät der Ultraschallsensoreinrichtung übermittelt.

Ein erfindungsgemäßes Kraftfahrzeug, insbesondere ein Personenkraftwagen, umfasst eine erfindungsgemäße Ultraschallsensoreinrichtung.

Die mit Bezug auf das erfindungsgemäße Verfahren vorgestellten bevorzugten Ausführungsformen und deren Vorteile gelten entsprechend für die erfindungsgemäße Ultraschallsensoreinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensoreinrichtung gemäß einer Ausführungsform der Erfindung;
- Fig. 2: ein Flussdiagramm zur Erläuterung eines Verfahrens gemäß einer Ausführungsform der Erfindung;
- Fig. 3 bis 6: beispielhaftes Summensignal sowie beispielhafte Korrelationsausgangssignale;
- Fig. 7: einen beispielhaften Signalabschnitt eines Summensignals;
- Fig. 8: einen beispielhaften Signalabschnitt eines Korrelationsausgangssignals zeitlich zugeordnet zu dem Signalabschnitt gemäß Fig. 7; und
- Fig. 9 und 10: ein beispielhaftes Summensignal sowie ein beispielhaftes Auswertesignal, welches durch Signalabschnitte unterschiedlicher Korrelationsausgangssignale gebildet wird.

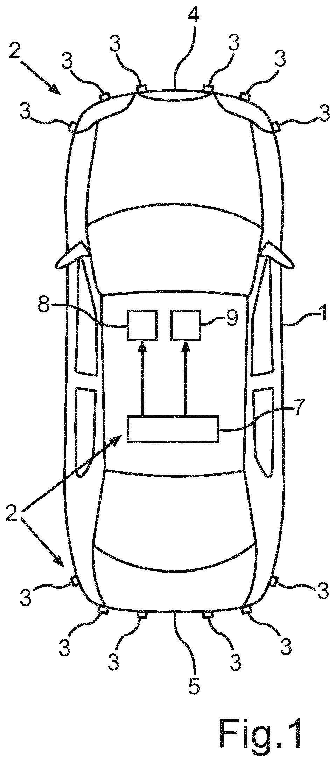

Ein in Fig. 1 dargestelltes Kraftfahrzeug 1 ist beispielsweise ein Personenkraftwagen. Das Kraftfahrzeug 1 beinhaltet eine Ultraschallsensoreinrichtung 2, welche beispielsweise eine Parkhilfe oder ein Parkassistenzsystem ist. Die Ultraschallsensoreinrichtung 2 dient zum Unterstützen des Fahrers des Kraftfahrzeugs 1 beim Durchführen von Parkvorgängen. Sie umfasst zu diesem Zwecke eine Vielzahl von Ultraschallsensoren 3, welche sowohl am vorderen Stoßfänger 4 als auch am hinteren Stoßfänger 5 verteilt angeordnet sind. Alle Ultraschallsensoren 3 sind mit einem Steuergerät 7 der Ultraschallsensoreinrichtung 2 elektrisch gekoppelt. Das Steuergerät 7 kann beispielsweise einen digitalen Signalprozessor und/oder einen Mikrocontroller beinhalten und dient zur Ansteuerung der Ultraschallsensoren 3. Das Steuergerät 7 empfängt auch Messdaten von den Ultraschallsensoren 3 und bestimmt in Abhängigkeit von diesen Messdaten die Abstände zwischen dem Kraftfahrzeug 1 und in seiner Umgebung befindlichen Hindernissen. In Abhängigkeit von diesen Abständen kann das Steuergerät 7 beispielsweise einen Lautsprecher 8 und/oder eine optische Anzeigeeinrichtung 9 - beispielsweise ein Display - ansteuern. Mithilfe des Lautsprechers 8 und/oder der Anzeigeeinrichtung 9 wird der Fahrer über die gemessenen Abstände informiert.

Gegebenenfalls kann die Ultraschallsensoreinrichtung 2 auch ein automatisches oder semi-automatisches Parkassistenzsystem sein, mittels welchem eine Parklücke automatisch detektiert und eine geeignete Parkbahn automatisch berechnet wird, entlang welcher das Kraftfahrzeug 1 dann automatisch oder semi-autonom in die Parklücke geführt werden kann. Bei vollautomatischen Parkassistenzsystemen übernimmt die Ultraschallsensoreinrichtung 2 sowohl die Längsführung als auch die Querführung des Kraftfahrzeugs 1, während bei semi-automatischen bzw. halbautomatischen Systemen die Fahrerassistenzeinrichtung 2 lediglich die Querführung und somit die Lenkung automatisch übernimmt, während der Fahrer selbst Gas geben und bremsen muss. Es sind auch Systeme bekannt, bei denen der Fahrer sowohl die Längsführung als auch die Querführung selbst übernehmen muss, jedoch Hinweise bezüglich der Lenkung durch die Ultraschallsensoreinrichtung 2 ausgegeben werden.

Das Steuergerät 7 kann die Ultraschallsensoren 3 derart ansteuern, dass die Ultraschallsensoren 3 jeweils ein Sendesignal (Ultraschall) mit einem aufgeprägten, spezifischen und vorbestimmten Code aussenden. Dazu werden die Sendesignale moduliert, beispielsweise frequenz-moduliert und/oder phasen-moduliert. Nachfolgend wird ein Verfahren gemäß einer Ausführungsform näher erläutert. Wenngleich sich die nachfolgende Beschreibung auf einen einzelnen Ultraschallsensor 3 bezieht, können auch alle anderen Sensoren 3 in der gleichen Art und Weise betrieben werden.

Ein Ultraschallsensor 3 sendet ein Sendesignal aus, welches auf eine spezifische Art und Weise moduliert ist und somit ein spezifisches Codewort als Kennung enthält. Dieses Sendesignal wird dann von einem Hindernis reflektiert und gelangt wieder zum Ultraschallsensor 3 als Empfangssignal. Der Ultraschallsensor 3 empfängt dieses Empfangssignal.

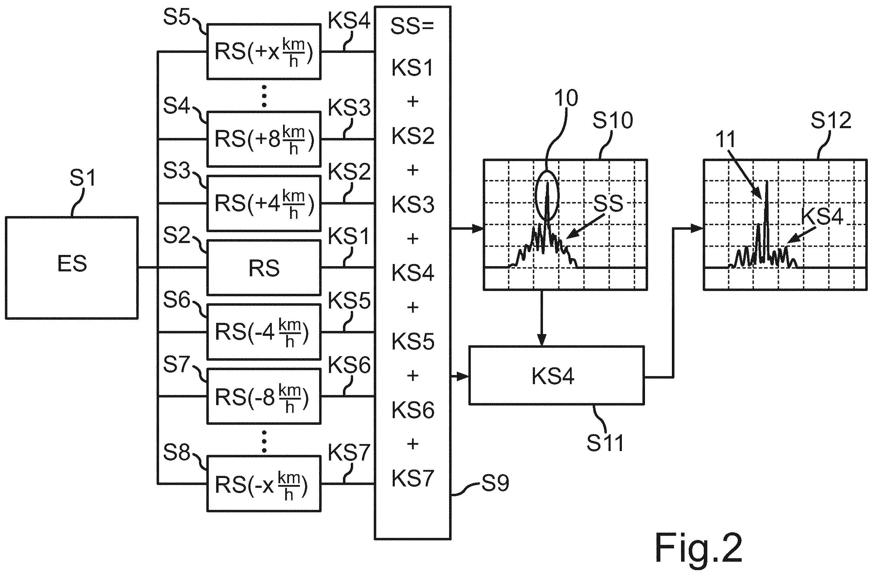

Die Decodierung des Empfangssignals wird nun Bezug nehmend auf Fig. 2 näher erläutert. Gemäß Schritt S1 wird zu dem empfangenen Schallsignal ein elektrisches Empfangssignal ES mittels eines Piezoelements bereitgestellt und dann mithilfe eines entsprechenden Analog-Digital-Wandlers im Ultraschallsensor 3 zu einem digitalen Empfangssignal ES umgewandelt. Die nachfolgende Signalverarbeitung erfolgt dann mittels einer Auswerteeinrichtung des Ultraschallsensors 3 anhand des digitalen Empfangssignals ES. Gemäß Schritt S1 liegt also ein moduliertes bzw. codiertes und digitales Empfangssignal ES vor. Gemäß Schritt S2 wird ein Referenzsignal RS bereitgestellt, welches dem ausgesendeten Sendesignal entspricht. Aus diesem Referenzsignal RS wird eine Vielzahl von Korrelationseingangssignalen bereitgestellt: RS, RS(+4 km/h), RS(+8 km/h), RS(+x km/h), RS(-4 km/h), RS(-8 km/h) und RS(-x km/h). Mit anderen Worten wird das Referenzsignal RS um eine Vielzahl von verschiedenen Frequenzverschiebungswerten frequenzverschoben, wobei es sich bei den Frequenzverschiebungswerten im Ausführungsbeispiel sowohl um negative als auch um positive Werte handelt. Im Ausführungsbeispiel wird ein Abstand zwischen den benachbarten Frequenzverschiebungswerten gewählt, welcher einer Relativgeschwindigkeit von 4km/h entspricht.

Gemäß Schritt S2 wird das Empfangssignal ES mit dem Referenzsignal RS korreliert. Auch dieses nicht-frequenzverschobene Referenzsignal RS ist ein Korrelationseingangssignal im Sinne der Erfindung, welches durch eine Frequenzverschiebung des Referenzsignals RS um den Nullwert gebildet wird. Durch diese Korrelation wird ein Korrelationsausgangssignal KS1 bereitgestellt.

Gemäß Schritt S3 wird das Empfangssignal ES mit dem Korrelationseingangssignal RS(+4 km/h) korreliert. Als Ergebnis dieser Korrelation wird ein Korrelationsausgangssignal KS2 bereitgestellt.

Gemäß Schritt S4 wird das Empfangssignal ES mit dem Korrelationseingangssignal RS(+8 km/h) korreliert, wobei als Korrelationsergebnis ein Korrelationsausgangssignal KS3 gebildet wird.

Gemäß Schritt S5 wird durch eine Korrelation des Empfangssignals ES mit dem Korrelationseingangssignal RS(+x km/h) ein Korrelationsausgangssignal KS4 bereitgestellt.

Das Empfangssignal ES wird gemäß Schritt S6 auch mit dem Korrelationseingangssignal RS(-4 km/h) korreliert - hier wird ein Korrelationsausgangssignal KS5 bereitgestellt.

Gemäß Schritt S7 wird das Empfangssignal ES mit dem Korrelationseingangssignal RS(-8 km/h) korreliert. Es wird ein Korrelationsausgangssignal KS6 bereitgestellt.

Schließlich wird das Empfangssignal ES gemäß Schritt S8 auch mit dem Korrelationseingangssignal RS(-x km/h) korreliert, um ein Korrelationsausgangssignal KS7 bereitzustellen.

Gemäß Schritt S9 wird aus den Korrelationsausgangssignalen KS1 bis KS7 aller Dopplerbins ein Summensignal SS bereitgestellt: SS=KS1+KS2+KS3+...+KS7.

Die Auswerteeinrichtung des Ultraschallsensors 3 analysiert dann gemäß Schritt S10 das Summensignal SS und wählt in Abhängigkeit von dieser Analyse gemäß Schritt S11 eines der Korrelationsausgangssignale aus (hier beispielsweise KS4). Dabei sucht die Auswerteeinrichtung im Summensignal SS nach einem Maximum 10 und wählt dasjenige Korrelationsausgangssignal KS4 aus, zu welchem das Maximum 10 gehört. Gemäß Schritt S12 werden in dem ausgewählten Korrelationsausgangssignal KS4 Zielechos 11 detektiert.

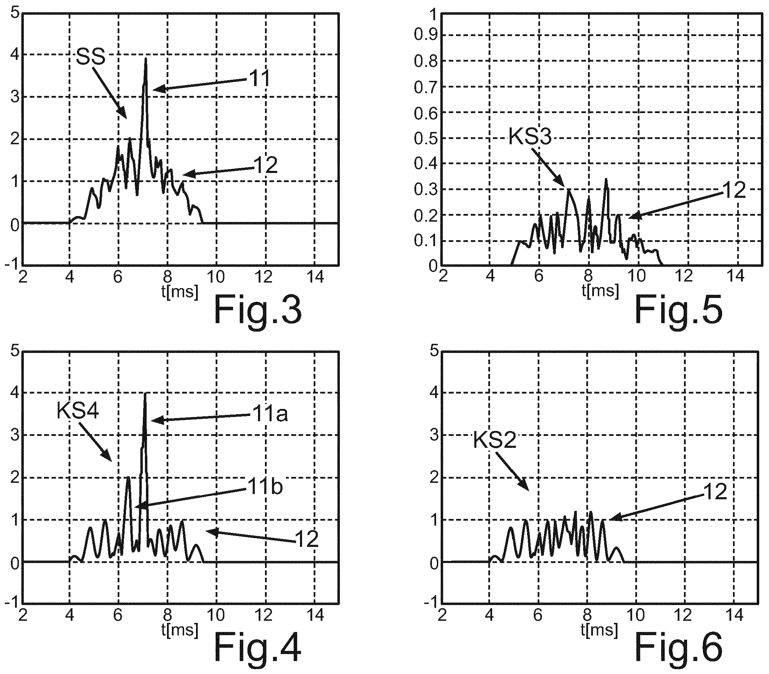

Ein beispielhaftes Summensignal SS ist dabei in Fig. 3 näher gezeigt. Dargestellt ist dabei die Amplitude des Summensignals SS über der Zeit t. Wie aus Fig. 3 hervorgeht, enthält das Summensignal SS eine Signalspitze bzw. ein Signalecho 11, welches deutlich größer als ein Korrelationsrauschen 12 ist. Weitere Zielechos können hier nicht detektiert werden.

In den Fig. 4 bis 6 sind hingegen einzelne Korrelationsausgangssignale dargestellt, hier KS4, KS3 respektive KS2. Wie insbesondere aus Fig. 4 hervorgeht, können anhand des Korrelationsausgangssignals KS4 insgesamt zwei Zielechos 11a, 11b detektiert werden, wobei das erste Zielecho 11a dem Zielecho 11 gemäß Fig. 3 entspricht. Anhand des Korrelationsausgangssignals KS4 kann zusätzlich auch das zweite Zielecho 11b detektiert werden, welches im Summensignal SS in dem Korrelationsrauschen 12 verschwindet. Die in den Fig. 5 und 6 dargestellten Korrelationsausgangssignale KS3 bzw. KS2 enthalten lediglich das Korrelationsrauschen 12.

Wird anhand des Summensignals SS gemäß Fig. 3 das Korrelationsausgangssignal KS4 gemäß Fig. 4 ausgewählt, so können insgesamt mehrere Zielechos 11a, 11b als in dem Summensignal SS detektiert werden. Es verbessert sich somit die räumliche Auflösung der Ultraschallsensoreinrichtung 2.

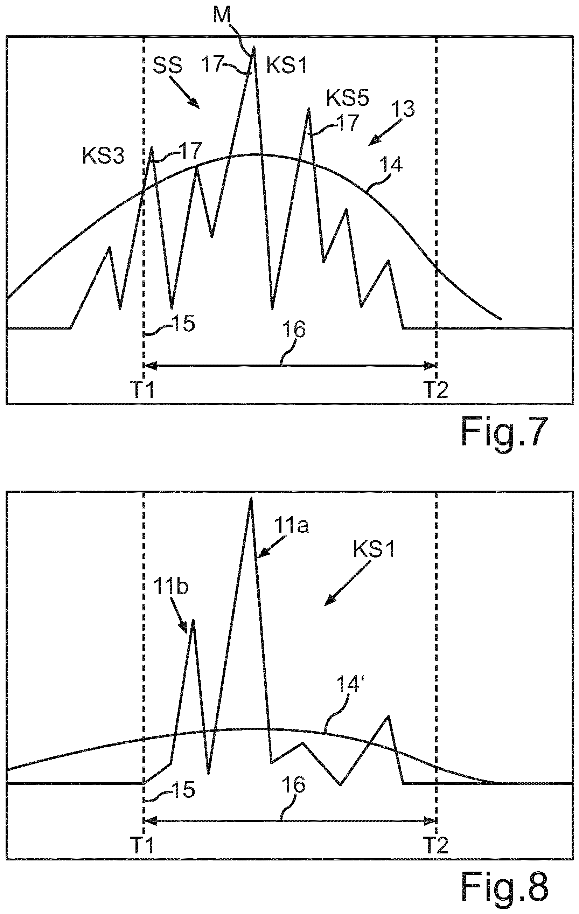

Die Auswahl eines der Korrelationsausgangssignale KS1 bis KS7 erfolgt für unterschiedliche Signalabschnitte des Summensignals SS separat. Die Bestimmung der Signalabschnitte wird nachfolgend unter Bezugnahme auf die Fig. 7 bis 10 näher erläutert. In Fig. 7 ist dabei ein einzelner Signalabschnitt 13 eines beispielhaften Summensignals SS dargestellt. Um das Summensignal SS in mehrere Signalabschnitte zu unterteilen, wird eine Schwellwertfunktion 14 bereitgestellt, welche eine Hüllkurve darstellt und durch Tiefpass-Filterung des Summensignals SS gebildet wird. Das Summensignal SS wird mit der Schwellwertfunktion 14 verglichen. Überschreitet das Summensignal SS zu einem Zeitpunkt T1 die Schwellwertfunktion 14, so wird zum Zeitpunkt T1 der Beginn 15 eines neuen Signalabschnitts 13 definiert. Der Signalabschnitt 13 weist eine vorgegebene Zeitdauer 16 auf und endet somit zu einem Zeitpunkt T2. Die Auswerteeinrichtung vergleicht dann alle Signalspitzen 17, welche größer als die Schwellwertfunktion 14 sind. Die größte Signalspitze 17 entspricht einem lokalen Maximum M. Zu jeder Signalspitze 17 ist außerdem die Information vorhanden, zu welchem Korrelationsausgangssignal KS1 bis KS7 die jeweilige Signalspitze 17 gehört. Wie aus Fig. 7 hervorgeht, gehören die Signalspitzen 17 beispielsweise zu den Korrelationsausgangssignalen KS1, KS5 und KS3.

Da das Maximum M zum Korrelationsausgangssignal KS1 gehört, wird zur Detektion von Zielechos 11 innerhalb der Zeitdauer 16 der zeitlich korrespondierende Abschnitt des Korrelationsausgangssignals KS1 verwendet, welcher in Fig. 8 näher dargestellt ist. Wie aus Fig. 8 hervorgeht, enthält das Korrelationsausgangssignal KS1 zwei potentielle Zielechos 11a, 11b. Das zweite Zielecho 11b könnte anhand des Summensignals SS alleine nicht detektiert werden. In Fig. 8 ist außerdem eine entsprechende Hüllkurve 14' gezeigt, welche durch Tiefpass-Filterung des Korrelationsausgangssignals KS1 gebildet wird. Diese Hüllkurve 14' ist deutlich niedriger als die Schwellwertfunktion 14 gemäß Fig. 7. Das Korrelationsrauschen 12 des einzelnen Korrelationsausgangssignals KS1 ist nämlich deutlich kleiner als das Korrelationsrauschen 12 des Summensignals SS, sodass auch mehrere Zielechos 11a, 11b im Korrelationsausgangssignal KS1 detektiert werden können.

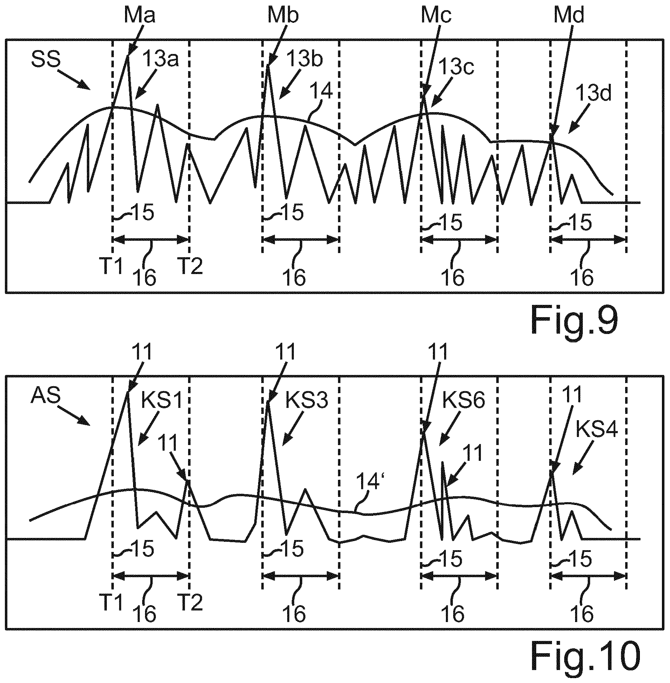

Nach Ablauf der Zeitdauer 16 wird dann erneut nach dem Beginn 15 eines weiteren, neuen Signalabschnitts 13 des Summensignals SS gesucht. Wie aus Fig. 9 hervorgeht, wird nach Ablauf des ersten Signalabschnitts 13a die Amplitude des Summensignals SS erneut mit der Schwellwertfunktion 14 verglichen. Überschreitet das Summensignal SS die Schwellwertfunktion 14, wird der Beginn 15 eines neuen Signalabschnitts 13b derselben Zeitdauer 16 definiert. Nach Ablauf dieser Zeitdauer 16 wird das Summensignal SS erneut mit der Schwellwertfunktion 14 verglichen, und bei Überschreiten der Schwellwertfunktion 14 wird der Beginn 15 eines weiteren Signalabschnitts 13c definiert, welcher ebenfalls die gleiche Zeitdauer 16 aufweist. In Fig. 9 ist weiterhin ein Signalabschnitt 13d gezeigt, welcher nach dem Signalabschnitt 13c detektiert wird. Während die Zeitdauer 16 jedes Signalabschnitts 13a bis 13d konstant bleibt, ändern sich die zeitlichen Abstände zwischen den jeweiligen Signalabschnitten 13a bis 13d.

Zu jedem Signalabschnitt 13a bis 13d wird jeweils separat eines der Korrelationsausgangssignale KS1 bis KS7 ausgewählt, und zwar jeweils dasjenige Korrelationsausgangssignal KS1 bis KS7, welches innerhalb des jeweiligen Signalabschnitts 13a bis 13d das lokale Maximum Ma bis Md aufweist. Gemäß Fig. 10 wird insgesamt ein Auswertesignal AS gebildet, welches aus Signalabschnitten unterschiedlicher Korrelationsausgangssignale KS1 bis KS7 besteht. Für den Signalabschnitt 13a des Summensignals SS wird beispielsweise der zeitlich korrespondierende Abschnitt des Korrelationsausgangssignals KS1 ausgewählt, da das lokale Maximum Ma zu diesem Korrelationsausgangssignal KS1 gehört. Für den Signalabschnitt 13b wird beispielsweise der korrespondierende Abschnitt des Korrelationsausgangssignals KS3 ausgewählt, da das lokale Maximum Mb zu diesem Korrelationsausgangssignal KS3 gehört. Der Signalabschnitt 13c des Summensignals SS wird durch den zeitlich zugeordneten Abschnitt des Korrelationsausgangssignals KS6 ersetzt, da das lokale Maximum Mc zum Korrelationsausgangssignal KS6 gehört. Schließlich wird im Ausführungsbeispiel der Signalabschnitt 13d des Summensignals SS durch den korrespondierenden Abschnitt des Korrelationsausgangssignals KS4 ersetzt, da das lokale Maximum Md zu diesem Korrelationsausgangssignal KS4 gehört.

Die Detektion der Zielechos 11 erfolgt dann durch Auswertung des Auswertesignals AS. Hierbei wird eine Detektionsschwellwertkurve (in Fig. 10 nicht dargestellt) definiert, mit welcher die Amplitude des Auswertesignals AS verglichen wird. Die in Fig. 10 dargestellten potentiellen Zielechos 11 werden nur dann als tatsächliche Zielechos angezeigt, wenn sie größer als die genannte Detektionsschwellwertkurve sind. Mit dieser Detektionsschwellwertkurve werden beispielsweise Bodenreflektionen und/oder eine Anhängerkupplung herausgefiltert.

## Patentansprüche

1. Verfahren zum Detektieren von Zielechos (11) in einem Empfangssignal (ES) eines Ultraschallsensors (3) eines Kraftfahrzeugs (1), mit den Schritten:
- Bereitstellen eines Referenzsignals (RS) zur Dekodierung des Empfangssignals (ES),
- zu einer Vielzahl von vorbestimmten Frequenzverschiebungswerten Bereitstellen jeweils eines Korrelationseingangssignals (RS) durch Verschieben des Referenzsignals (RS) in seiner Frequenz um den jeweiligen Frequenzverschiebungswert,
- Korrelieren des Empfangssignals (ES) separat mit jedem der Korrelationseingangssignale (RS) und hierdurch Bereitstellen von jeweiligen Korrelationsausgangssignalen (KS1 bis KS7) als Ergebnis der jeweiligen Korrelation und
- Bereitstellen eines Summensignals (SS) als Summe der Korrelationsausgangssignale (KS1 bis KS7), und
- dass anhand des Summensignals (SS) eines der Korrelationsausgangssignale (KS1 bis KS7) ausgewählt wird und das Detektieren der Zielechos (11) durch Auswertung des ausgewählten Korrelationsausgangssignals (KS1 bis KS7) erfolgt,
- dass ein Maximum (M) des Summensignals (SS) detektiert wird und zur Detektion der Zielechos (11) dasjenige Korrelationsausgangssignal (KS1 bis KS7) ausgewählt wird, zu welchem das detektierte Maximum (M) gehört, und - **dadurch gekennzeichnet, dass** das Summensignal (SS) in eine Vielzahl von Signalabschnitten (13) unterteilt wird und zu jedem Signalabschnitt (13) die Auswahl eines der Korrelationsausgangssignale (KS1 bis KS7) separat erfolgt, wobei jedem Signalabschnitt (13) jeweils ein zeitlich korrespondierender Abschnitt des jeweils ausgewählten Korrelationsausgangssignals (KS1 bis KS7) zugeordnet wird, und
- dass zu jedem Signalabschnitt (13) des Summensignals (SS) ein jeweiliges lokales Maximum (Ma bis Md) detektiert wird und jeweils dasjenige Korrelationsausgangssignal (KS1 bis KS7) ausgewählt wird, zu welchem das jeweilige lokale Maximum (Ma bis Md) gehört.

2. Verfahren nach Anspruch 1,
**dadurch gekennzeichnet, dass**
das Unterteilen des Summensignals (SS) in Abhängigkeit von einem zeitlichen Verlauf des Summensignals (SS) erfolgt.

3. Verfahren nach Anspruch 2,
**dadurch gekennzeichnet, dass**
das Unterteilen des Summensignals (SS) umfasst, dass das Summensignal (SS) mit einer Schwellwertfunktion (14) verglichen wird und bei Überschreiten der Schwellwertfunktion (14) der Beginn eines neuen Signalabschnitts (13) einer vorgegebenen Zeitdauer (16) definiert wird.

4. Verfahren nach Anspruch 3,
**dadurch gekennzeichnet, dass**
erst nach Ablauf der vorgegebenen Zeitdauer (16) das Summensignal (SS) erneut zur Festlegung eines weiteren Signalabschnitts (13) mit der Schwellwertfunktion (14) verglichen wird.

5. Verfahren nach Anspruch 3 oder 4,
**dadurch gekennzeichnet, dass**
als die Schwellwertfunktion (14) eine Hüllkurve definiert wird, welche durch Tiefpass-Filterung des Summensignals (SS) bereitgestellt wird.

6. Verfahren nach einem der vorhergehenden Ansprüche,
**dadurch gekennzeichnet, dass**
die Auswertung des ausgewählten Korrelationsausgangssignals (KS1 bis KS7) zur Detektion der Zielechos (11) umfasst, dass Signalwerte des ausgewählten Korrelationsausgangssignals (KS1 bis KS7) mit einer Detektionsschwellwertkurve verglichen werden.

7. Ultraschallsensoreinrichtung (2) für ein Kraftfahrzeug (1), mit einer Empfangseinheit zum Empfangen eines Schallsignals und zum Bereitstellen eines elektrischen Empfangssignals (ES) abhängig von dem empfangenen Schallsignal, und mit einer Auswerteeinrichtung zum Detektieren von Zielechos (11) in dem Empfangssignal (ES), wobei die Auswerteeinrichtung dazu ausgelegt ist,
- ein Referenzsignal (RS) zur Dekodierung des Empfangssignals (ES) bereitzustellen,
- zu einer Vielzahl von vorbestimmten Frequenzverschiebungswerten jeweils ein Korrelationseingangssignal (RS) durch Verschieben des Referenzsignals (RS) in seiner Frequenz um den jeweiligen Frequenzverschiebungswert bereitzustellen,
- das Empfangssignal (ES) separat mit jedem der Korrelationseingangssignale (RS) zu korrelieren und hierdurch jeweilige Korrelationsausgangssignale (KS1 bis KS7) als Ergebnis der jeweiligen Korrelation bereitzustellen und
- ein Summensignal (SS) als Summe der Korrelationsausgangssignale (KS1 bis KS7) bereitzustellen,
wobei die Auswerteeinrichtung dazu ausgelegt ist, anhand des Summensignals (SS) eines der Korrelationsausgangssignale (KS1 bis KS7) auszuwählen und die Zielechos (11) durch Auswertung des ausgewählten Korrelationsausgangssignals (KS1 bis KS7) zu detektieren, dass ein Maximum (M) des Summensignals (SS) detektiert wird und zur Detektion der Zielechos (11) dasjenige Korrelationsausgangssignal (KS1 bis KS7) ausgewählt wird, zu welchem das detektierte Maximum (M) gehört, **dadurch gekennzeichnet, dass** das Summensignal (SS) in eine Vielzahl von Signalabschnitten (13) unterteilt wird und zu jedem Signalabschnitt (13) die Auswahl eines der Korrelationsausgangssignale (KS1 bis KS7) separat erfolgt, wobei jedem Signalabschnitt (13) jeweils ein zeitlich korrespondierender Abschnitt des jeweils ausgewählten Korrelationsausgangssignals (KS1 bis KS7) zugeordnet wird, und wobei zu jedem Signalabschnitt (13) des Summensignals (SS) ein jeweiliges lokales Maximum (Ma bis Md) detektiert wird und jeweils dasjenige Korrelationsausgangssignal (KS1 bis KS7) ausgewählt wird, zu welchem das jeweilige lokale Maximum (Ma bis Md) gehört.

8. Ultraschallsensoreinrichtung (2) nach Anspruch 7,
**dadurch gekennzeichnet, dass**
die Ultraschallsensoreinrichtung (2) einen Ultraschallsensor (3) mit einem Sensorgehäuse aufweist, in welchem die Auswerteeinrichtung angeordnet ist.

9. Kraftfahrzeug (1) mit einer Ultraschallsensoreinrichtung (2) nach Anspruch 7 oder 8.

## Claims

1. Method for detecting target echoes (11) in a reception signal (ES) of an ultrasonic sensor (3) of a motor vehicle (1), comprising the following steps:
- providing a reference signal (RS) for decoding the reception signal (ES),
- with respect to a multiplicity of predetermined frequency shift values providing in each case a correlation input signal (RS) by shifting the reference signal (RS) in terms of its frequency by the respective frequency shift value,
- correlating the reception signal (ES) separately with each of the correlation input signals (RS) and thereby providing respective correlation output signals (KS1 to KS7), as a result of the respective correlation, and
- providing a summation signal (SS) as the sum of the correlation output signals (KS1 to KS7),
and
- wherein on the basis of the summation signal (SS) one of the correlation output signals (KS1 to KS7) is selected and detecting the target echoes (11) is carried out by evaluating the selected correlation output signal (KS1 to KS7),
- wherein a maximum (M) of the summation signal (SS) is detected and that correlation output signal (KS1 to KS7) to which the detected maximum (M) belongs is selected for detecting the target echoes (11), and
**characterized**
- **in that** the summation signal (SS) is subdivided into a multiplicity of signal sections (13) and the selection of one of the correlation output signals (KS1 to KS7) is carried out separately with respect to each signal section (13), wherein each signal section (13) is respectively assigned a temporally corresponding section of the respectively selected correlation output signal (KS1 to KS7), and
- **in that** with respect to each signal section (13) of the summation signal (SS) a respective local maximum (Ma to Md) is detected and in each case that correlation output signal (KS1 to KS7) is selected to which the respective local maximum (Ma to Md) belongs.

2. Method according to Claims 1,
**characterized in that**
subdividing the summation signal (SS) is carried out depending on a temporal profile of the summation signal (SS) .

3. Method according to Claim 2,
**characterized in that**
subdividing the summation signal (SS) comprises comparing the summation signal (SS) with a threshold value function (14) and, in the event of the threshold value function (14) being exceeded, defining the beginning of a new signal section (13) of a predefined time duration (16).

4. Method according to Claim 3,
**characterized in that**
only after the predefined time duration (16) has elapsed is the summation signal (SS) compared with the threshold value function (14) again for defining a further signal section (13).

5. Method according to Claim 3 or 4,
**characterized in that**
an envelope curve provided by low-pass filtering of the summation signal (SS) is defined as the threshold value function (14).

6. Method according to any of the preceding claims, **characterized in that**
evaluating the selected correlation output signal (KS1 to KS7) for detecting the target echoes (11) comprises comparing signal values of the selected correlation output signal (KS1 to KS7) with a detection threshold value curve.

7. Ultrasonic sensor device (2) for a motor vehicle (1), comprising a receiving unit for receiving a sound signal and for providing an electrical reception signal (ES) depending on the received sound signal, and comprising an evaluation device for detecting target echoes (11) in the reception signal (ES) wherein the evaluation device is designed
- to provide a reference signal (RS) for decoding the reception signal (ES),
- with respect to a multiplicity of predetermined frequency shift values, to provide in each case a correlation input signal (RS) by shifting the reference signal (RS) in terms of its frequency by the respective frequency shift value,
- to correlate the reception signal (ES) separately with each of the correlation input signals (RS) and thereby to provide respective correlation output signals (KS1 to KS7), as a result of the respective correlation, and
- to provide a summation signal (SS) as the sum of the correlation output signals (KS1 to KS7),
wherein
the evaluation device is designed, on the basis of the summation signal (SS), to select one of the correlation output signals (KS1 to KS7) and to detect the target echoes (11) by evaluating the selected correlation output signal (KS1 to KS7),
a maximum (M) of the summation signal (SS) is detected and that correlation output signal (KS1 to KS7) to which the detected maximum (M) belongs is selected for detecting the target echoes (11), **characterized**
**in that** the summation signal (SS) is subdivided into a multiplicity of signal sections (13) and the selection of one of the correlation output signals (KS1 to KS7) is carried out separately with respect to each signal section (13), wherein each signal section (13) is respectively assigned a temporally corresponding section of the respectively selected correlation output signal (KS1 to KS7), and
**in that** with respect to each signal section (13) of the summation signal (SS) a respective local maximum (Ma to Md) is detected and in each case that correlation output signal (KS1 to KS7) is selected to which the respective local maximum (Ma to Md) belongs.

8. Ultrasonic sensor device (2) according to Claim 7, **characterized in that**
the ultrasonic sensor device (2) comprises an ultrasonic sensor (3) having a sensor housing, in which the evaluation device is arranged.

9. Motor vehicle (1) comprising an ultrasonic sensor device (2) according to Claim 7 or 8.

## Revendications

1. Procédé de détection d'échos cibles (11) dans un signal de réception (ES) d'un capteur à ultrasons (3) d'un véhicule automobile (1), ledit procédé comprenant les étapes suivantes :
- fournir un signal de référence (RS) pour décoder le signal de réception (ES),
- fournir un signal d'entrée de corrélation (RS) pour une pluralité de valeurs de décalage de fréquence prédéterminées par décalage de la fréquence du signal de référence (RS) de la valeur de décalage de fréquence respective,
- corréler le signal de réception (ES) séparément avec chacun des signaux d'entrée de corrélation (RS) et fournir ainsi des signaux de sortie de corrélation respectifs (KS1 à KS7) comme résultat de la corrélation respective et
- fournir un signal de somme (SS) en tant que somme des signaux de sortie de corrélation (KS1 à KS7), et
- choisir l'un des signaux de sortie de corrélation (KS1 à KS7) sur la base du signal de somme (SS) et détecter les échos cibles (11) par évaluation du signal de sortie de corrélation sélectionné (KS1 à KS7),
- détecter un maximum (M) du signal de somme (SS) et choisir le signal de sortie de corrélation (KS1 à KS7), auquel appartient le maximum détecté (M), pour détecter les échos cibles (11), et
**caractérisé en ce que**
- le signal de somme (SS) est divisé en une multitude de portions de signal (13) et l'un des signaux de sortie de corrélation (KS1 à KS7) est sélectionné séparément pour chaque portion de signal (13), chaque portion de signal (13) étant associée à une portion temporellement correspondante du signal de sortie de corrélation (KS1 à KS7) à chaque fois sélectionné, et
- un maximum local respectif (Ma à Md) est détecté pour chaque portion de signal (13) du signal de somme (SS) et à chaque fois le signal de sortie de corrélation (KS1 à KS7), auquel appartient le maximum local respectif (Ma à Md), est sélectionné.

2. Procédé selon la revendication 1,
**caractérisé en ce que**
la division du signal de somme (SS) est effectuée en fonction de la variation dans le temps du signal de somme (SS).

3. Procédé selon la revendication 2,
**caractérisé en ce que**
la division du signal de somme (SS) comprend le fait que le signal de somme (SS) est comparé à une fonction de seuil (14) et, lorsque la fonction de seuil (14) est dépassée, le début d'une nouvelle portion de signal (13) d'un intervalle de temps spécifié (16) est défini.

4. Procédé selon la revendication 3,
**caractérisé en ce que**
c'est seulement après que l'intervalle de temps spécifié (16) s'est écoulé que le signal de somme (SS) est de nouveau comparé à la fonction de valeur de seuil (14) pour définir une autre portion de signal (13).

5. Procédé selon la revendication 3 ou 4,
**caractérisé en ce que**
une courbe d'enveloppe, qui est fournie par filtrage passe-bas du signal de somme (SS), est définie comme fonction de valeur de seuil (14).

6. Procédé selon l'une des revendications précédentes,
**caractérisé en ce que**
l'évaluation du signal de sortie de corrélation sélectionné (KS1 à KS7) pour détecter les échos cibles (11) comprend le fait que les valeurs de signal du signal de sortie de corrélation sélectionné (KS1 à KS7) sont comparées à une courbe de valeur de seuil de détection.

7. Dispositif à capteur à ultrasons (2) destiné à un véhicule automobile (1), ledit dispositif comprenant une unité de réception destinée à recevoir un signal acoustique et à fournir un signal de réception électrique (ES) en fonction du signal acoustique reçu, et un dispositif d'évaluation destiné à détecter des échos cibles (11) dans le signal de réception (ES), le dispositif d'évaluation étant conçu pour
- fournir un signal de référence (RS) pour décoder le signal de réception (ES),
- fournir un signal d'entrée de corrélation (RS) pour une pluralité de valeurs de décalage de fréquence prédéterminées par décalage de la fréquence du signal de référence (RS) de la valeur de décalage de fréquence respective,
- corréler le signal de réception (ES) séparément avec chacun des signaux d'entrée de corrélation (RS) et fournir ainsi des signaux de sortie de corrélation respectifs (KS1 à KS7) comme résultat de la corrélation respective et
- fournir un signal de somme (SS) en tant que somme des signaux de sortie de corrélation (KS1 à KS7),
le dispositif d'évaluation étant conçu pour sélectionner l'un des signaux de sortie de corrélation (KS1 à KS7) sur la base du signal de somme (SS) et pour détecter les échos cibles (11) par évaluation du signal de sortie de corrélation sélectionné (KS1 à KS7) un maximum (M) du signal de somme (SS) étant détecté et le signal de sortie de corrélation (KS1 à KS7), auquel appartient le maximum détecté (M), étant sélectionné pour détecter les échos cibles (11),
**caractérisé en ce que**
le signal de somme (SS) est divisé en une multitude de portions de signal (13) et l'un des signaux de sortie de corrélation (KS1 à KS7) est sélectionné séparément pour chaque section de signal (13), chaque portion de signal (13) étant associée à une portion temporellement correspondante du signal de sortie de corrélation (KS1 à KS7) sélectionné à chaque fois, et un maximum local respectif (Ma à Md) étant détecté pour chaque portion de signal (13) du signal de somme (SS) et le signal de sortie de corrélation (KS1 à KS7), auquel appartient le maximum local respectif (Ma à Md), étant sélectionné.

8. Dispositif à capteur à ultrasons (2) selon la revendication 7,
**caractérisé en ce que**
le dispositif à capteur à ultrasons (2) comprend un capteur à ultrasons (3) pourvu d'un boîtier de capteur dans lequel le dispositif d'évaluation est disposé.

9. Véhicule automobile (1) comprenant un dispositif à capteur à ultrasons (2) selon la revendication 7 ou 8.
